# DEMANDE DE BREVET EUROPEEN

(11) **EP 0 940 621 A1**
(43) Date de publication de la demande: **08.09.1999**
(21) Numéro de dépôt: 99400499.2
(22) Date de dépôt: 02.03.1999
(51) Int. Cl.: F16L 55/033

(54) **Tuyau étanche à amortissement acoustique pour le transport de fluides gazeux, et son procédé de fabrication**

(30) Priorité: 05.03.1998 FR 9802681
(71) Demandeur: WESTAFLEX-AUTOMOBILE, 59058 Roubaix Cedex 1 (FR)
(72) Inventeur: Lepoutre, Henri, 59058 Roubaix Cedex 1 (FR)
(74) Mandataire: Eidelsberg, Victor Albert

(57) **Abrégé**

Tuyau étanche à amortissement acoustique pour le transport de fluides gazeux, notamment pour l'admission d'air de combustion dans un moteur thermique pour automobile, caractérisé en ce qu'il comporte une première couche 1 en un matériau poreux perméable aux fluides gazeux, et une seconde couche 4 constituée par une fine pellicule, accolée à la première couche et non adhérente à celle-ci, en un matériau souple, mécaniquement déformable de manière réversible et étanche aux fluides.

## Description

La présente invention est relative aux tuyaux étanches pour le transport de fluides gazeux. Parmi ces tuyaux, l'invention vise ceux qui sont du type à amortissement acoustique, c'est-à-dire qui présentent la propriété d'atténuer le niveau de bruit généré par la mise en résonance de la veine de fluide gazeux sur chacun de ses modes propres.

L'invention trouve son application préférée, mais non limitative, dans l'utilisation de ce tuyau pour l'admission de l'air de combustion dans un moteur thermique pour automobile. Dans cette application particulière, on sait qu'il est important, non seulement de ne pas permettre la pénétration de liquide, notamment de l'eau, à l'intérieur du tuyau qui transporte l'air de combustion, mais également de limiter le plus possible le bruit que génère la veine de fluide gazeux elle-même par ses résonances propres.

L'invention a pour but de fournir un tuyau de ce type qui présente d'excellentes propriétés d'amortissement acoustique et qui est d'une structure simple, et par conséquent peu onéreuse.

A cet effet, le tuyau selon l'invention est caractérisé en ce qu'il comporte une première couche en un matériau poreux perméable aux fluides gazeux, et une seconde couche constituée par une fine pellicule, accolée à la première couche et non adhérente à celle-ci, en un matériau souple, mécaniquement déformable de manière réversible et étanche aux fluides.

De préférence, la seconde couche est une couche extérieure, de sorte qu'une dissipation supplémentaire d'énergie puisse être réalisée par les vibrations du fluide gazeux à travers la première couche intérieure poreuse. De plus, du fait que les deux couches ne sont pas solidaires, la seconde couche, qui n'a aucune raideur, peut être ainsi maintenue dans une position figée par la première couche qui, elle, peut être plus ou moins rigidifiée.

Toutefois, il n'est pas à exclure que, dans certaines applications, la seconde couche soit une couche intérieure.

Le matériau constituant la seconde couche est de préférence du type visco-élastique, de manière qu'on obtienne un amortissement acoustique optimal, en coopération avec la nature poreuse de la première couche qui participe activement à l'amortissement, par sa nature poreuse créant une perte de charge.

Ce matériau de la seconde couche peut être du polyuréthane, une polyoléfine, par exemple du polypropylène, du P.V.C. ou un élastomère, par exemple du latex du type nitrile ou néoprène.

Avantageusement, le matériau de la première couche est fibreux ou constitué par une mousse à cellules ouvertes.

De manière connue en soi, la première couche peut être constituée par l'enroulement en hélice sur elle-même d'une bande de matériau poreux, les spires de l'hélice se chevauchant de préférence partiellement.

Pour conférer au tuyau une bonne rigidité radiale, on peut interposer un fil hélicoïdal de renfort, par exemple en métal ou en matière plastique, entre les parties de spires en chevauchement.

Quant à la seconde couche, elle est de préférence constituée par un tube d'un seul tenant, c'est-à-dire qu'elle n'est pas enroulée en hélice.

Pour son montage sur la première couche, la seconde couche n'est solidarisée avec celle-ci que ponctuellement, par exemple aux extrémités du tuyau.

L'invention concerne également un procédé particulier de fabrication de ce tuyau.

Selon ce procédé, on constitue la première couche au moins en partie en fibres thermofusibles, et on chauffe et on déforme l'ensemble des deux couches pour que, lors du refroidissement, d'une part les fibres thermofusibles se lient entre elles et aux autres fibres, et d'autre part la seconde couche, par déformation plastique, épouse sans adhérence la forme finale de la première couche.

Par exemple, la première couche est à base de polyester et elle comporte environ 20 % en poids de fibres de copolyester ayant un point de fusion d'environ 140°C, le reste étant des fibres de polyester ayant un point de fusion d'environ 200°C.

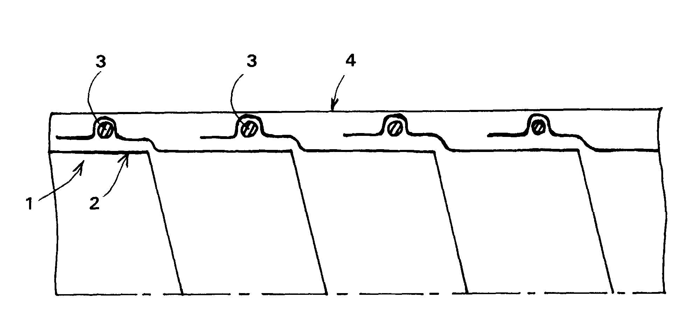

On comprendra bien l'invention à la lecture du complément de description qui va suivre et en référence au dessin annexé qui fait partie de la description et dont la Figure unique est une coupe axiale schématique d'une partie d'un tuyau établi suivant un mode de réalisation préféré de l'invention.

Le tuyau selon l'invention comporte une première couche 1 en un matériau poreux, voire très poreux, perméable aux fluides gazeux. La couche 1, enduite ou non-enduite, est par exemple à base de fibres de polyester et, dans l'exemple représenté, elle est constituée par l'enroulement en hélice sur elle-même d'une bande 2 de matériau poreux, par exemple de quelques centimètres de largeur. Les spires de l'hélice se chevauchent partiellement et sont solidarisées l'une de l'autre dans la zone de chevauchement.

De manière connue, on peut interposer, entre les parties de spires en chevauchement, un fil hélicoïdal de renfort 3, par exemple en métal ou en matière plastique, notamment en polyester, ce fil étant laissé libre en coulissement par rapport aux spires ou étant solidarisé de celles-ci.

Selon l'invention, le tuyau comporte au surplus une seconde couche 4 constituée par une fine pellicule qui est accolée à la première couche 1 et qui n'adhère pas à celle-ci, c'est-à-dire qu'elle est libre au moins radialement par rapport à la couche 1. Cette seconde couche 4 est en un matériau souple, mécaniquement déformable de manière réversible et étanche aux fluides.

De préférence, comme représenté sur la Figure, la seconde couche 4 recouvre extérieurement la première couche 1, de sorte qu'elle constitue une couche extérieure. Toutefois, dans certaines applications, il n'est pas exclu de prévoir que cette seconde couche 4 puisse être une couche intérieure.

Cette seconde couche 4 présente la propriété physique de se déformer mécaniquement de manière réversible pour pouvoir, par cette déformation réversible, absorber l'énergie acoustique qui, autrement, se manifesterait sous la forme de bruit.

Dans la réalisation préférée représentée, l'air en vibration véhiculé par le tuyau traverse en partie la couche intérieure poreuse 1 et vient déformer essentiellement radialement la couche extérieure 4, en perdant ainsi son énergie vibratoire.

Cette propriété d'amortissement de la couche 4 est encore renforcée si, suivant une caractéristique avantageuse de l'invention, cette couche est constituée en un matériau du type visco-élastique. On rappellera que, par contraste avec un matériau élastique pour lequel, avant que la zone dite plastique ne soit atteinte (la zone plastique est atteinte s'il subsiste une déformation résiduelle par rapport à l'état initial lorsque la contrainte est supprimée), il existe une relation biunivoque, ou unique, entre la déformation et la contrainte, un matériau visco-élastique présente la propriété d'avoir une courbe de déformation en fonction de la contrainte appliquée sous la forme d'une boucle fermée d'hystérésis. En d'autres termes, cela signifie que, dans un diagramme contrainte/déformation, le trajet ou courbe suivi par le point de fonctionnement lors du "retour", c'est-à-dire lors de la décroissance de l'effort appliqué, ne se superpose pas au trajet ou courbe suivi lors de l'"aller", c'est-à-dire lors de la croissance de l'effort appliqué, mais est en retard (hystérésis) par rapport à cette courbe aller, les deux courbes se rejoignant néanmoins au point de départ, c'est-à-dire lorsque l'effort appliqué est nul. L'aire intérieure de la boucle d'hystérésis représente la quantité d'énergie vibratoire ou acoustique qui a été absorbée par la déformation visco-élastique du matériau.

Cette aire est d'autant plus grande que le changement de sens de déformation est brutal et que la vitesse est élevée. On amortit ainsi les résonances de la veine d'air délimitée par la paroi du tuyau.

On définit δ comme étant l'angle formé entre les deux tangentes des deux courbes "aller" et "retour" se rejoignant au point de départ. On considérera ici qu'un matériau est visco-élastique si tgδ est supérieure ou égale à 0,1.

Par exemple, le matériau de la seconde couche 4 peut être constitué par du polyuréthane, une polyoléfine, par exemple du polypropylène, du P.V.C. ou un élastomère, par exemple du latex de type nitrile ou néoprène.

De préférence, notamment du fait que la seconde couche 4 est libre par rapport à la première couche 1, cette couche 4 est constituée par un tube d'un seul tenant qui constitue une sorte de manchon. Néanmoins, cette seconde couche 4 est solidarisée ponctuellement avec la première couche 1, par exemple seulement aux extrémités du tuyau, notamment au niveau des raccords de montage du tuyau.

L'invention vise également un procédé particulier de fabrication du tuyau ci-dessus.

Selon ce procédé, on constitue la première couche 1 au moins en partie en fibres thermofusibles, et on chauffe et on déforme l'ensemble constitué par les deux couches 1 et 4 pour que, lors du refroidissement, d'une part les fibres thermofusibles se lient entre elles et aux autres fibres en constituant une sorte d'ossature ou de charpente, et d'autre part la seconde couche, par déformation plastique, épouse sans adhérence la forme finale de la première couche.

Par exemple, la première couche 1 est à base de polyester et comporte environ 20 % en poids de fibres de copolyester ayant un point de fusion d'environ 140°C, le reste étant des fibres de polyester ayant un point de fusion d'environ 200°C.

Ainsi, avec ce procédé, on peut déformer à volonté un tuyau composite initial, par exemple cylindrique de section droite circulaire constante, pour lui donner, par déformation limitée, une forme différente, la seconde couche 4 épousant fidèlement cette nouvelle forme pour assurer la fonction d'amortissement acoustique.

Bien entendu, l'invention n'est pas limitée au mode de réalisation qui a été décrit. On pourrait au contraire concevoir diverses variantes sans sortir pour autant de son cadre.

## Revendications

1. Tuyau étanche à amortissement acoustique pour le transport de fluides gazeux, comportant une première couche (1) en un matériau poreux perméable aux fluides gazeux, et une seconde couche (4) constituée par une fine pellicule, accolée à la première couche et non adhérente à celle-ci, en un matériau souple, mécaniquement déformable de manière réversible et étanche aux fluides caractérisé en ce que le matériau de la seconde couche est du type visco-élastique.

2. Tuyau selon la revendication 1, caractérisé en ce que le matériau de la seconde couche appartient au groupe constitué par le polyuréthane, les polyoléfines, par exemple du polypropylène, le P.V.C., et les élastomères, par exemple du latex du type nitrile ou néoprène.

3. Tuyau selon l'une des revendications 1 ou 2, caractérisé en ce que la seconde couche est une couche extérieure.

4. Tuyau selon l'une des revendications 1 ou 2, caractérisé en ce que la seconde couche est une couche intérieure.

5. Tuyau selon l'une des revendications 1 à 4, caractérisé en ce que le matériau de la première couche appartient au groupe constitué par les matériaux fibreux et les mousses à cellules ouvertes.

6. Tuyau selon l'une des revendications 1 à 5, caractérisé en ce que la première couche est constituée par l'enroulement en hélice sur elle-même d'une bande (2) de matériau poreux.

7. Tuyau selon la revendication 6, caractérisé en ce qu'un fil hélicoïdal de renfort (3), par exemple en métal ou en matière plastique, est interposé entre les parties de spires en chevauchement.

8. Tuyau selon l'une des revendications 1 à 7, caractérisé en ce que la seconde couche est constituée par un tube d'un seul tenant.

9. Tuyau selon l'une des revendications 1 à 8, caractérisé en ce que la seconde couche est solidarisée avec la première couche seulement ponctuellement, par exemple aux extrémités du tuyau.

10. Procédé de fabrication du tuyau selon l'une des revendications 1 à 9, caractérisé en ce qu'il consiste à constituer la première couche (1) au moins en partie en fibres thermofusibles, et à chauffer et à déformer l'ensemble des deux couches (1, 4) pour que, lors du refroidissement, d'une part les fibres thermofusibles se lient entre elles et aux autres fibres, et d'autre part la seconde couche (4), par déformation plastique, épouse sans adhérence la forme finale de la première couche.

11. Procédé selon la revendication 10, caractérisé en ce que la première couche est à base de polyester et comporte environ 20 % en poids de fibres de copolyester ayant un point de fusion d'environ 140°C, le reste étant des fibres de polyester ayant un point de fusion d'environ 200°C.
